# FASCICULE DE BREVET EUROPEEN

(11) **EP 4 479 632 B1**
(45) Date de publication et mention de la délivrance du brevet: **15.04.2026**
(21) Numéro de dépôt: 23709250.7
(22) Date de dépôt: 15.02.2023
(51) Int. Cl.: F01D 25/18

(54) **TURBOMACHINE POUR UN AERONEF**
TURBOMASCHINE FÜR EIN FLUGZEUG
TURBOMACHINE FOR AN AIRCRAFT

(30) Priorité: 17.02.2022 FR 2201432
(43) Date de publication de la demande: 25.12.2024
(73) Titulaire: SAFRAN AIRCRAFT ENGINES, 75015 Paris (FR)
(72) Inventeur: STOLIAROFF-PEPIN, Nicolas, 77550 MOISSY-CRAMAYEL (FR); BECOULET, Julien Fabien Patrick, 77550 MOISSY-CRAMAYEL (FR); GROS-BOROT, Maeva Daphné, 77550 MOISSY-CRAMAYEL (FR); MAURER, Paco, 77550 MOISSY-CRAMAYEL (FR)
(74) Mandataire: Gevers & Orès
(86) Numéro de dépôt international: PCT/FR2023/050200
(87) Numéro de publication internationale: WO 2023/156733

(56) Documents cités:
- FR-B1- 3 104 206
- FR-B1- 3 104 206
- GB-A- 2 578 522
- US-A1- 2022 042 460
- US-B2- 11 220 929

## Description

### Domaine technique de l'invention

L'invention concerne le domaine technique des turbomachines pour les aéronefs.

### Arrière-plan technique

Une turbomachine d'aéronef s'étend généralement le long et autour d'un axe longitudinal. De telles turbomachines sont par exemple divulguées dans GB 2 578 522 A, dans US 11 220 929 B2 ou dans FR 3 104 206 B1. Elle comprend un générateur de gaz qui comporte typiquement d'amont en aval, dans le sens d'écoulement des gaz dans la turbomachine, un compresseur basse pression, un compresseur haute pression, une chambre de combustion des gaz, une turbine haute pression et une turbine basse pression.

Le rotor du compresseur basse pression est typiquement relié au rotor de la turbine basse pression par l'intermédiaire d'un arbre basse pression. Le rotor du compresseur haute pression est quant à lui relié au rotor de la turbine haute pression par un arbre haute pression. L'arbre haute pression est généralement agencé coaxialement autour de l'arbre basse pression. La turbomachine comprend en outre une soufflante qui est située en amont du générateur de gaz et qui est entrainée en rotation autour de l'axe longitudinal par un arbre de soufflante. L'arbre de soufflante peut être relié à l'arbre basse pression par l'intermédiaire d'un réducteur de vitesse. L'arbre basse pression est guidé en rotation par l'intermédiaire de paliers de guidage qui doivent être lubrifiés pour assurer leur bon fonctionnement. Aussi, le réducteur de vitesse présente des engrènements et doit également être lubrifié pour assurer son bon fonctionnement. Il est donc connu de projeter de l'huile de lubrification sur les paliers de guidage et dans le réducteur. Afin de préserver les organes connexes de la turbomachine de cette huile de lubrification, les paliers de guidage de l'arbre basse pression sont typiquement agencés dans des enceintes de lubrification. Les paliers de guidage situés à l'amont de la turbomachine sont situés dans une enceinte de lubrification intermédiaire, et les paliers de guidage situés à l'aval de la turbomachine sont agencés dans une enceinte de lubrification aval. Le réducteur peut quant à lui être agencé dans une enceinte de lubrification amont.

Les enceintes de lubrification contiennent un brouillard d'huile de lubrification sous pression qu'il est nécessaire de contenir pour éviter des fuites d'huile vers l'extérieur des enceintes et pour préserver les organes connexes de la turbomachine. Les enceintes sont en général délimitées par des parois ou des éléments de rotor et par des parois ou des éléments de stator. En fonctionnement, il est donc nécessaire d'assurer une étanchéité entre les parois ou éléments de stator et de rotor.

Cette étanchéité est assurée par des joints d'étanchéité dynamique montés entre les éléments ou parois de stator et les éléments ou parois de rotor qui délimitent de façon étanche les enceintes de lubrification.

Pour limiter les fuites d'huile à l'extérieur de l'enceinte au travers de ces joints d'étanchéité, il est nécessaire d'ajuster les pressions entre l'intérieur et l'extérieur des enceintes de lubrification. A cet effet, il est nécessaire d'amener de l'air pressurisé jusqu'aux joints d'étanchéité. La pression de l'air à l'extérieur de l'enceinte doit être supérieure à la pression à l'intérieur de l'enceinte. L'air pressurisé situé à l'extérieur de l'enceinte va donc naturellement traverser les joints d'étanchéité et pénétrer dans l'enceinte, ce qui empêchera les fuites de l'huile depuis l'enceinte vers l'extérieur à travers ces joints.

Dans la technique actuelle, une solution pour pressuriser les joints d'étanchéité de l'enceinte de lubrification aval consiste à prélever de l'air dans les étages amont du compresseur haute pression et à diriger cet air axialement jusqu'aux joints de cette enceinte. Cependant, cette solution ne donne pas entière satisfaction puisque l'air prélevé dans les étages amont du compresseur haute pression doit traverser tous les étages du compresseur haute pression avant d'atteindre l'enceinte aval. Par conséquent, la température de cet air augmente lors de son trajet et atteint une température élevée en arrivant à l'enceinte de lubrification aval.

Une température de l'air de pressurisation de l'enceinte de lubrification aval trop élevée n'est pas souhaitée car elle favoriserait la cokéfaction de l'huile de lubrification dans l'enceinte de lubrification aval.

Dans ce contexte, il existe un besoin de fournir une turbomachine permettant d'assurer l'étanchéité de l'enceinte de lubrification aval en limitant les risques de cokéfaction de l'huile de lubrification dans cette enceinte,

### Résumé de l'invention

A cet effet, l'invention propose une turbomachine pour un aéronef, la turbomachine s'étendant le long d'un axe longitudinal et comprenant :
- un compresseur basse pression comprenant un rotor de compresseur,
- un arbre basse pression d'entrainement du rotor de compresseur, l'arbre basse pression étant centré sur l'axe longitudinal et présentant un passage interne destiné à la circulation d'un premier flux d'air le long de l'axe longitudinal de l'amont vers l'aval, l'arbre basse pression comprenant :
   - un premier tronçon cylindrique,
   - un deuxième tronçon solidaire en rotation du premier tronçon et agencé en amont du premier tronçon, le deuxième tronçon comprenant une première portion tronconique reliée au rotor de compresseur,
   - un carter intermédiaire agencé autour du premier tronçon et en aval du compresseur basse pression,
   - au moins un palier de guidage en rotation de l'arbre basse pression agencé radialement entre le premier tronçon et le carter intermédiaire,
   - une enceinte de lubrification intermédiaire annulaire dans laquelle est agencé ledit au moins un palier, l'enceinte de lubrification intermédiaire étant agencée dans le carter intermédiaire,
   - une enceinte d'air annulaire configurée pour être alimentée en air provenant du compresseur basse pression, l'enceinte d'air étant délimitée axialement, au moins en partie, par la première portion tronconique et une paroi de séparation radiale montée autour du premier tronçon, la première portion tronconique présentant en outre au moins un orifice faisant communiquer l'enceinte d'air avec le passage interne pour permettre un passage du premier flux d'air de l'enceinte d'air vers le passage interne.

Grâce au passage interne de l'arbre basse pression, il est possible de faire circuler le premier flux d'air prélevé dans le compresseur basse pression d'amont en aval. Ce premier flux d'air peut être utilisé pour la pressurisation de l'enceinte de lubrification aval. Grâce à une telle configuration, il n'est plus nécessaire de traverser les étages du compresseur haute pression. La température du premier flux d'air est alors maintenue à une température adéquate pour limiter la cokéfaction de l'huile dans cette enceinte de lubrification.

En outre, selon l'invention, l'arbre basse pression présente des premier et second tronçons. Le premier tronçon est destiné à être relié à la turbine basse pression et le deuxième tronçon est relié au compresseur basse pression. Grâce à la présence d'un premier tronçon cylindrique relié à la turbine basse pression et d'un deuxième tronçon tronconique muni de l'orifice et relié au compresseur basse pression, il est possible d'assurer l'entrée du premier flux d'air dans le passage interne sans percer le premier tronçon. Ceci permet de répondre aux contraintes d'intégration mécanique de l'arbre basse pression relié à la turbine basse pression sans impacter les performances de la turbomachine. En effet, un perçage de la partie de l'arbre basse pression reliée à la turbine basse pression implique de surdimensionner localement l'épaisseur de l'arbre basse pression au niveau du perçage pour maintenir une résistance mécanique de l'arbre suffisante. Or, l'arbre basse pression étant destiné à être agencé à l'intérieur de l'arbre haute pression, une surépaisseur locale de l'arbre basse pression nécessite d'augmenter le diamètre de l'arbre haute pression ou de réduire les jeux entre les deux arbres. Les performances de la turbomachine sont alors réduites dans une telle configuration. L'invention surmonte cet inconvénient. En outre, en s'affranchissant d'un perçage sur le premier tronçon, il n'est pas nécessaire de prévoir des joints dynamiques (par exemple à labyrinthe) entre ce premier tronçon et l'arbre haute pression pour limiter les fuites au travers de ce perçage, ce qui permet de diminuer le nombre de joints dans cette zone et donc d'améliorer la fiabilité de l'ensemble.

L'invention peut comprendre une ou plusieurs des caractéristiques suivantes, prises isolément les unes des autres ou en combinaison les unes avec les autres :
- l'enceinte d'air est délimitée extérieurement, au moins en partie, par une première paroi axiale s'étendant axialement vers l'amont à partir de la paroi de séparation et une deuxième paroi axiale reliée à la première portion tronconique et s'étendant axialement vers l'aval, les première et seconde parois délimitant axialement entre elles une entrée d'air pour permettre un passage du premier flux d'air du compresseur basse pression à l'intérieur de l'enceinte d'air,
- une cavité d'air annulaire fixe agencée autour de l'enceinte d'air, la cavité d'air débouchant dans l'enceinte d'air et étant alimentée par de l'air provenant du compresseur basse pression,
- la cavité d'air est délimitée axialement, au moins en partie, par un joint d'étanchéité dynamique logé radialement entre la première paroi axiale et le carter intermédiaire, et un joint d'étanchéité dynamique logé radialement entre la seconde paroi axiale et le carter intermédiaire,
- une cavité de drainage agencée axialement entre l'enceinte de lubrification intermédiaire et la cavité d'air,
- la cavité de drainage est délimitée axialement par le joint d'étanchéité dynamique logé radialement entre la première paroi axiale et le carter intermédiaire, et un joint d'étanchéité dynamique logé radialement entre la première paroi axiale et le carter intermédiaire et séparant la cavité de drainage de l'enceinte de lubrification intermédiaire,
- un compresseur haute pression agencé en aval du carter intermédiaire et comprenant un rotor de compresseur,
- un arbre haute pression agencé coaxialement autour du premier tronçon de l'arbre basse pression et relié au rotor de compresseur, le premier tronçon et l'arbre haute pression délimitant un espace annulaire pour la circulation d'un second flux d'air de l'aval vers l'amont, l'arbre haute pression comprenant un orifice radial débouchant dans l'espace annulaire pour le passage du second flux d'air de l'extérieur vers l'intérieur de l'espace annulaire,
- un manchon agencé autour du premier tronçon et à l'intérieur du carter intermédiaire, le manchon étant solidaire de la paroi de séparation et délimitant axialement avec une extrémité amont de l'arbre haute pression une ouverture pour le passage du second flux d'air de l'espace annulaire vers l'enceinte de lubrification intermédiaire,
- une soufflante mobile en rotation autour de l'axe longitudinal et agencée à l'amont du compresseur basse pression,
- un arbre de soufflante relié à la soufflante,
- un réducteur de vitesse reliant l'arbre de soufflante à l'arbre basse pression, le réducteur de vitesse étant agencé dans une enceinte de lubrification amont, et le deuxième tronçon comprenant une paroi radiale s'étendant vers l'extérieur à partir de la première portion tronconique et reliant la première portion tronconique au rotor de compresseur, la paroi radiale présentant un trou axial pour le passage d'air de l'enceinte d'air vers l'enceinte de lubrification amont,
- un réducteur de vitesse reliant l'arbre de soufflante à l'arbre basse pression, le réducteur de vitesse étant agencé dans une enceinte de lubrification amont, le deuxième tronçon comprenant une seconde portion tronconique reliée au réducteur de vitesse et à la première portion tronconique, la seconde portion tronconique présentant un trou débouchant dans le passage interne pour le passage d'air de l'enceinte d'air vers l'enceinte de lubrification amont.

### Brève description des figures

D'autres caractéristiques et avantages ressortiront de la description qui suit d'un mode de réalisation non limitatif de l'invention en référence aux dessins annexés sur lesquels :
la figure 1 est une vue schématique en coupe longitudinale d'une demi-turbomachine selon l'invention ;
la figure 2 est une vue de détail en coupe longitudinale d'une partie de la demi-turbomachine de la figure 1;
la figure 3 est une vue en coupe longitudinale d'un premier exemple de réalisation de l'invention ;
la figure 4 est une vue en coupe longitudinale d'une variante de réalisation de la figure 3 ;
la figure 5 est une vue en coupe longitudinale d'une autre variante de réalisation de la figure 3 ;
la figure 6 est une vue en coupe longitudinale d'une autre variante de réalisation de la figure 3.

### Description détaillée de l'invention

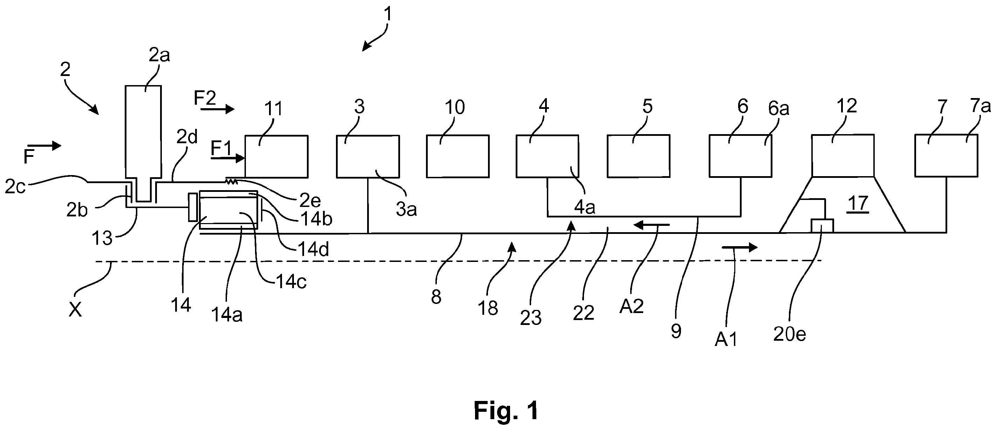

Un exemple de turbomachine 1 d'aéronef selon l'invention est représenté très brièvement sur la figure 1. La turbomachine 1 est par exemple un turboréacteur à double flux.

La turbomachine 1 s'étend le long d'un axe longitudinal X. Un flux de gaz F s'écoule dans la turbomachine 1.

Au sens de la présente invention, les termes « amont » et « aval » s'entendent relativement par rapport au sens d'écoulement du flux de gaz F dans la turbomachine 1.

Par ailleurs, les termes « longitudinal », « longitudinalement », « radial », « radialement » s'entendent par rapport à l'axe longitudinal X de la turbomachine. Les termes « extérieur », « intérieur » s'entendent relativement par rapport à l'éloignement de l'axe longitudinal X le long d'un axe radial perpendiculaire à l'axe longitudinal X.

La turbomachine 1 comprend d'amont en aval, une soufflante 2 et un générateur de gaz. Le générateur de gaz comprend, d'amont en aval, un compresseur basse pression 3, un compresseur haute pression 4, une chambre de combustion 5, une turbine haute pression 6 et une turbine basse pression 7.

La turbomachine 1 comprend en outre un carter intermédiaire 10. agencé axialement en aval du compresseur basse pression 3, entre le compresseur basse pression 3 et le compresseur haute pression 4. Le carter intermédiaire 10 comprend par exemple une virole interne et une virole externe qui sont centrées sur l'axe longitudinal X. Les viroles interne et externe sont par exemple reliées par des bras.

La turbomachine 1 peut comprendre en outre un carter d'entrée 11. Le carter d'entrée 11 est agencé axialement entre la soufflante 2 et le compresseur basse pression 3. Le carter d'entrée 11 comprend par exemple une virole interne et une virole externe qui sont centrées sur l'axe longitudinal X. Les viroles interne et externe sont par exemple reliées par des bras.

La turbomachine 1 peut comprendre en outre un carter inter-turbines 12. Le carter inter-turbines 12 est agencé axialement entre la turbine haute pression 6 et la turbine basse pression 7.

Chaque compresseur 3,4 comprend un rotor de compresseur 3a, 4a et chaque turbine 6, 7 comprend un rotor de turbine 6a, 7a. Les rotors de compresseur 3a, 4a et de turbine 6a, 7a sont composés d'une pluralité d'étages comprenant chacun une roue aubagée.

Le rotor de compresseur 3a du compresseur basse pression 3 est relié au rotor de turbine 7a de la turbine basse pression 7 par un arbre basse pression 8. Ils forment un corps basse pression.

Le rotor de compresseur 4a du compresseur haute pression 4 est relié au rotor de turbine 6a de la turbine haute pression 6 par un arbre haute pression 9. Ils forment un corps haute pression.

Les arbres basse pression 8 et haute pression 9 sont centrés sur l'axe longitudinal X et mobiles en rotation autour de l'axe longitudinal X. L'arbre haute pression 9 est agencé coaxialement autour de l'arbre basse pression 8.

Le flux de gaz F traverse la soufflante 2 et se divise en un flux d'air primaire F1 traversant une veine primaire et en un flux d'air secondaire F2 traversant une veine secondaire entourant la veine primaire. La veine primaire est délimitée au moins en partie par les viroles interne et externe. Le flux d'air primaire F1 traverse les compresseurs basse pression 3 et haute pression 4. Le flux d'air primaire F1 comprimé traverse ensuite la chambre de combustion 5 dans laquelle il est mélangé à un carburant. Les gaz issus de la combustion traversent ainsi les turbines haute pression 6 et basse pression 7. L'énergie des gaz est transformée par le rotor de turbine 7a de la turbine basse pression 7 en énergie mécanique permettant d'entrainer en rotation l'arbre basse pression 8 et par suite, le compresseur basse pression 3.

La soufflante 2 comprend un disque 2b mobile en rotation autour de l'axe longitudinal X et des aubes 2a régulièrement réparties sur le disque 2b. Le disque 2b peut être relié en amont à un cône d'entrée 2c et en aval à un anneau arrière 2d. Une extrémité de l'anneau arrière 2d est montée à l'intérieur du carter d'entrée 11. Un élément d'étanchéité 2e est monté radialement entre l'anneau arrière 2d et le carter d'entrée 11. L'élément d'étanchéité 2e est par exemple un joint dynamique tel qu'un joint à labyrinthe. Il comprend des léchettes portées par l'anneau arrière 2d qui coopèrent avec le carter interne 11.

Le disque 2b est entrainé en rotation par un arbre de soufflante 13. Avantageusement, l'arbre de soufflante 13 est relié à l'arbre basse pression 8 par l'intermédiaire d'un réducteur de vitesse 14. Le réducteur de vitesse 14 est de type mécanique. Il est par exemple à train épicycloïdal ou planétaire. Le réducteur de vitesse 14 comprend classiquement un solaire 14a et une couronne 14b centrés sur l'axe longitudinal X. Il comprend en outre des satellites 14c engrenant avec le solaire 14a et la couronne 14b. Il comprend en outre un porte-satellites 14d.

Le solaire 14a est solidaire en rotation de l'arbre basse pression 8 et forme l'entrée du réducteur de vitesse 14, tandis que l'un ou l'autre de la couronne 14b et du porte-satellites 14d, selon la configuration du réducteur 14, est solidaire en rotation de l'arbre de soufflante 13 et forme la sortie du réducteur de vitesse 14. Dans une configuration à train épicycloïdal (non représentée), la couronne 14b est fixe, donc solidaire d'une partie fixe de la turbomachine tel que le carter d'entrée 11 et le porte-satellites 14d est mobile en rotation donc solidaire de l'arbre de soufflante 13. Dans une configuration à train planétaire telle qu'illustrée sur la figure 1, la couronne 14b est mobile en rotation et donc solidaire de l'arbre de soufflante 13, et le porte-satellites 14d est fixe et donc solidaire d'une partie fixe de la turbomachine telle que le carter d'entrée 11.

Le réducteur de vitesse 14 permet l'entrainement de l'arbre de soufflante 13 à une vitesse de rotation inférieure à la vitesse de rotation de l'arbre basse pression 8. Ceci permet d'augmenter le taux de dilution de la turbomachine 1.

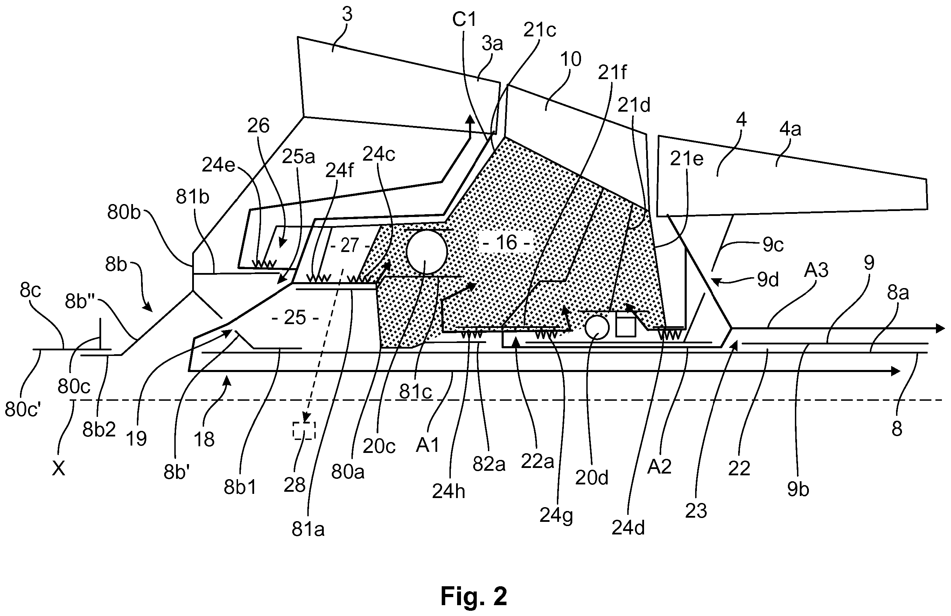

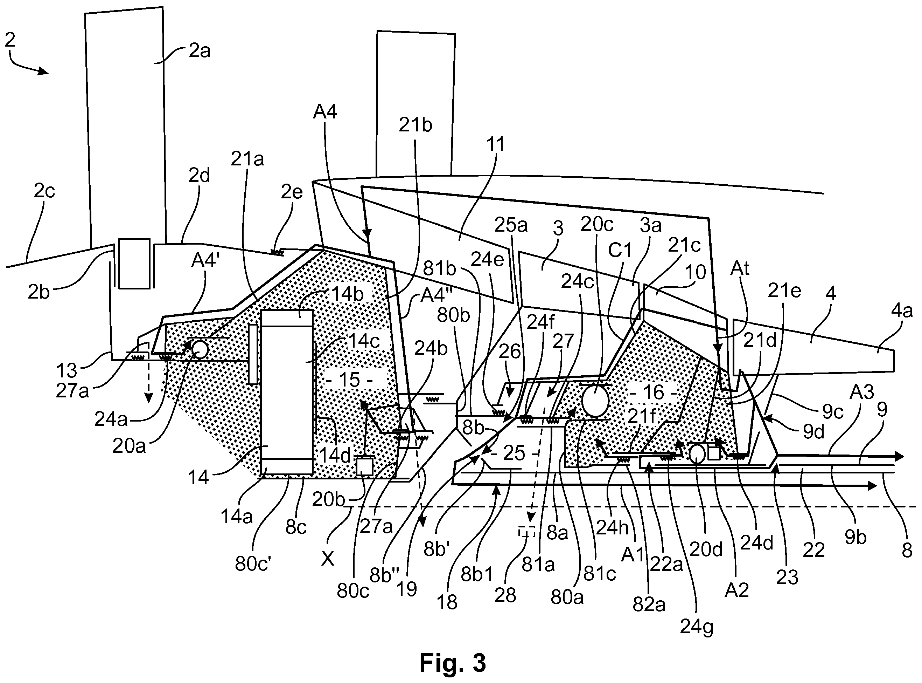

Comme mieux visible sur la figure 2 ou la figure 3, l'arbre basse pression 8 selon l'invention présente un passage interne 18 destiné à la circulation d'un premier flux d'air A1 le long de l'axe longitudinal X. En particulier, le premier flux d'air A1 circule dans le passage interne 18 d'amont en aval le long de l'axe longitudinal X. Le premier flux d'air A1 provient du compresseur basse pression 3.

L'arbre basse pression 8 comprend en outre, d'aval en amont, un premier tronçon 8a par exemple relié au rotor de turbine 7a de la turbine basse pression 7, un deuxième tronçon 8b relié au rotor de compresseur 3a du compresseur basse pression 3 et optionnellement un troisième tronçon 8c par exemple relié au réducteur de vitesse 14. L'arbre basse pression 8 est préférablement réalisé en au moins deux parties reliées les unes aux autres et solidaires en rotation. En particulier, les premier et deuxième tronçons 8a, 8b peuvent être reliés entre eux de façon démontable afin de permettre l'assemblage du corps haute pression autour du corps basse pression de la turbomachine 1.

Les premier, second, et troisième tronçons 8a, 8b, 8c sont creux pour le passage du premier flux d'air A1 et définissent chacun une section du passage interne 18.

Le premier tronçon 8a est cylindrique. Toutefois, le premier tronçon 8a peut présenter par exemple des variations de sa section, dans la direction longitudinale. L'extrémité aval du premier tronçon 8a est reliée au rotor de turbine 7a de la turbine basse pression 7 et l'extrémité amont opposée est reliée au deuxième tronçon 8b.

Selon l'invention, l'arbre basse pression 8 comprend une paroi de séparation 80a radiale montée autour du premier tronçon 8a. La paroi de séparation 80a est solidaire en rotation du premier tronçon 8a. La paroi de séparation 80a est par exemple agencée à l'intérieur du carter intermédiaire 10. La paroi de séparation 80a porte une première paroi axiale 81a s'étendant axialement vers l'amont à partir de la paroi de séparation 80a.

Avantageusement, l'arbre basse pression 8 comprend en outre un manchon 82a agencé autour du premier tronçon 8a et à l'intérieur du carter intermédiaire 10. Le manchon 82a est solidaire en rotation du premier tronçon 8a. Le manchon 82a est monté autour du premier tronçon 8a et est relié à celui-ci par une liaison de type cannelures par exemple. Le manchon 82a est agencé en aval de la paroi de séparation 80a et est relié à la paroi de séparation 80a. Le manchon 82a et la paroi de séparation 80a peuvent former une pièce monobloc montée autour du premier tronçon 8a par le biais de la liaison à cannelures par exemple. Avantageusement, le manchon 82a est cylindrique.

Le deuxième tronçon 8b est solidaire en rotation du premier tronçon 8a et est relié à celui-ci par une liaison mécanique par exemple de type cannelures. Il comprend une première portion tronconique 8b' et éventuellement une seconde portion tronconique 8b".

La première portion tronconique 8b' est évasée vers l'amont Selon l'invention, la première portion tronconique 8b' présente un orifice 19. L'orifice 19 débouche à l'extérieur et l'intérieur de la première portion tronconique 8b'. L'orifice 19 débouche ainsi dans le passage interne 18. L'orifice 19 présente un axe radial.

Comme représenté sur la figure 2, le deuxième tronçon 8b peut comprendre en outre une première portion cylindrique 8b1 solidaire de la première portion tronconique 8b'. Le deuxième tronçon 8b est relié à l'extrémité amont du premier tronçon 8a par l'intermédiaire de la première portion cylindrique 8b1 qui est par exemple munie de cannelures à cet effet. L'extrémité amont du premier tronçon 8a est ouverte. Elle débouche dans le deuxième tronçon 8b et notamment la première portion cylindrique 8b1 ou la première portion tronconique 8b'.

La seconde portion tronconique 8b" est évasée vers l'aval. Elle est solidaire de la première portion tronconique 8b'. Chaque portion tronconique 8b', 8b" présente une surface radiale annulaire centrée sur l'axe longitudinal X, la jonction des deux surfaces radiales formant un rebord annulaire. La seconde portion tronconique 8b" est par ailleurs reliée au troisième tronçon 8c.

En outre, avantageusement, le deuxième tronçon 8b comprend une paroi radiale 80b s'étendant radialement vers l'extérieur à partir de la première portion tronconique 8b' et en particulier du rebord annulaire. La paroi radiale 80b relie la première portion tronconique 8b' au rotor de compresseur 3a du compresseur basse pression 3. Une deuxième paroi axiale 81b reliée à la première portion tronconique 8b'. Plus particulièrement, la deuxième paroi axiale 81b est portée par la paroi radiale 80b et s'étend axialement vers l'aval à partir de cette paroi radiale 80b.

La seconde portion tronconique 8b" est par exemple solidaire de l'extrémité aval du troisième tronçon 8c.

Comme représenté sur la figure 2, le deuxième tronçon 8b comprend en outre une seconde portion cylindrique 8b2 solidaire de la seconde portion tronconique 8b". Le deuxième tronçon 8b est fixé à l'extrémité aval du troisième tronçon 8c par l'intermédiaire de la seconde portion cylindrique 8b2. La seconde portion cylindrique 8b2 est par exemple fixée à l'intérieur de l'extrémité aval du troisième tronçon 8c par l'intermédiaire de cannelures. Le troisième tronçon 8c est avantageusement agencé à l'intérieur du carter d'entrée 11. Le troisième tronçon 8c présente un corps cylindrique 80c' qui s'étend entre l'extrémité amont et aval du troisième tronçon 8c. Le troisième tronçon 8c est relié au solaire 14a du réducteur de vitesse 14. Plus particulièrement, l'extrémité amont du troisième tronçon 8c est reliée au solaire 14a. Avantageusement, le troisième tronçon 8c comprend une paroi de support 80c s'étendant radialement vers l'extérieur depuis le corps cylindrique 80c' et notamment depuis l'extrémité aval du corps cylindrique 80c'.

Par ailleurs, l'arbre haute pression 9 est avantageusement agencé coaxialement autour de la première portion 8a de l'arbre basse pression 8 et ils définissent ensemble un espace annulaire 22 pour la circulation d'un second flux d'air A2 de l'aval vers l'amont.

L'arbre haute pression 9 comprend par exemple un corps cylindrique 9b et une jupe tronconique 9c s'étendant radialement vers l'extérieur depuis le corps cylindrique 9b. La jupe tronconique 9c est reliée au rotor de compresseur 4a du compresseur haute pression 4. La jupe tronconique 9c présente un perçage 9d.

L'arbre haute pression 9 comprend par ailleurs un orifice radial 23. L'orifice radial 23 débouche à l'intérieur et à l'extérieur de l'arbre haute pression 9. Il débouche ainsi dans l'espace annulaire 22. Par « orifice radial », il est entendu que l'axe de l'orifice s'étend radialement par rapport à l'axe longitudinal X. L'orifice radial 23 est ménagé sur le corps cylindrique 9b. Il est par exemple ménagé en aval de la jupe tronconique 9c.

En outre, l'arbre haute pression 9 est plus particulièrement agencé en aval du manchon 82a. L'arbre haute pression 9 délimite axialement avec le manchon 82a une ouverture 22a débouchant dans l'espace annulaire 22.

Les arbres basse et haute pression 8, 9 de la turbomachine 1 sont guidés en rotation par des paliers. Les paliers sont par exemple des paliers à roulements tels que des rouleaux ou des billes.

Comme illustré sur les figures 3 à 6, l'arbre de soufflante 13 est guidé en rotation par un premier palier 20a de guidage. Le premier palier 20a est agencé radialement entre l'arbre de soufflante 13 et le carter d'entrée 11. Le premier palier 20a comprend par exemple un roulement agencé entre une bague externe et une bague interne. La bague externe est portée par un premier support palier 21a s'étendant radialement vers l'intérieur à partir du carter d'entrée 11. La bague interne est portée par l'arbre de soufflante 13. Le roulement est par exemple une rangée de billes. Avantageusement, le roulement comprend deux rangées de billes.

L'arbre basse pression 8 est guidé en rotation par un deuxième et un troisième paliers 20b, 20c. Le deuxième palier 20b est agencé radialement entre le carter d'entrée 11 et l'arbre basse pression 8, notamment le troisième tronçon 8c. Le deuxième palier 20b comprend par exemple un roulement agencé entre une bague externe et une bague interne. La bague externe est par exemple portée par un deuxième support palier 21b s'étendant radialement vers l'intérieur à partir du carter d'entrée 11. La bague interne est par exemple portée par le troisième tronçon 8c. Le roulement est par exemple une rangée de rouleaux. Le troisième palier 20c est agencé radialement entre le carter intermédiaire 10 et le premier tronçon 8a. En référence par exemple à la figure 2, le troisième palier 20c comprend un roulement, par exemple une rangée de billes, agencé radialement entre une bague interne et une bague externe. La bague externe est portée par un troisième support palier 21c relié au carter intermédiaire 10. La bague interne est portée par une troisième paroi axiale 81c s'étendant axialement vers l'aval à partir de la paroi de séparation 80a.

L'arbre haute pression 9 est guidé en rotation par un quatrième palier 20d. Le quatrième palier 20d est par exemple agencé radialement entre l'arbre haute pression 9 et le carter intermédiaire 10. Le quatrième palier 20d comprend un roulement, par exemple une rangée de billes et une rangée de rouleaux agencés radialement entre une bague externe et une bague interne. La bague interne est portée par l'arbre haute pression 9 et notamment le corps cylindrique 9b et la bague externe est portée par un quatrième support palier 21d relié au carter intermédiaire 10.

Comme représenté sur la figure 1, l'arbre basse pression 8 peut être guidé en rotation en aval par un cinquième palier 20e agencé radialement entre une extrémité aval de l'arbre basse pression 8 et le carter inter-turbines 12 par exemple.

Les paliers 20a, 20b, 20c, 20d, 20e ainsi que le réducteur de vitesse 14 doivent être lubrifiés par de l'huile pour assurer leur bon fonctionnement. Pour ne pas contaminer les organes connexes de la turbomachine 1 par l'huile, les paliers 20a, 20b, 20c, 20d, 20e ainsi que le réducteur de vitesse 14 sont agencés dans des enceintes de lubrification.

A cet effet, la turbomachine 1 comprend en outre une enceinte de lubrification amont 15 dans laquelle sont agencés les premier et deuxième paliers 20a, 20b et le réducteur de vitesse 14, une enceinte de lubrification intermédiaire 16 dans laquelle sont agencés les troisièmes et quatrième paliers 20c, 20d, une enceinte de lubrification aval 17 dans laquelle est agencé le cinquième palier 20e.

Les enceintes de lubrification 15, 16, 17 sont annulaires.

L'enceinte de lubrification amont 15 est par exemple agencée à l'intérieur du carter d'entrée 11 et notamment à l'intérieur de la virole interne.

L'enceinte de lubrification intermédiaire 16 est agencée à l'intérieur du carter intermédiaire 10. Elle est délimitée intérieurement au moins en partie par l'arbre basse pression 8, notamment le manchon 82a, et par l'arbre haute pression 9.

L'enceinte de lubrification aval 17 est agencée par exemple à l'intérieur du carter inter-turbines 12.

Chaque enceinte de lubrification 15, 16, 17 est alimentée en huile par au moins un circuit de lubrification (non représenté). A l'intérieur de chaque enceinte de lubrification 15, 16, 17 règne un brouillard d'huile sous pression. Afin de limiter les fuites d'huile en dehors des enceintes 15, 16, 17, des joints de type dynamique tels que des joints à labyrinthe sont agencés aux extrémités axiales des enceintes 15, 16, 17. Un joint de type dynamique est entendu comme un ensemble limitant les fuites d'un fluide entre une partie fixe et une partie tournante.

En référence aux figures 3 à 6, l'enceinte amont 15 est délimitée axialement par un premier joint 24a d'étanchéité de type dynamique par exemple à labyrinthe et un deuxième joint 24b d'étanchéité de type dynamique par exemple à labyrinthe. Le premier joint 24a délimite l'extrémité amont de l'enceinte amont 15 et le deuxième joint 24b délimite l'extrémité aval de l'enceinte amont 15. Le premier joint 24a est agencé en amont du premier palier 20a. Il comprend une bague externe portée par le premier support palier 21a et une bague interne portée par l'arbre de soufflante 13. La bague interne est revêtue de léchettes coopérant avec la bague externe. Le deuxième joint 24b est agencé en aval du deuxième palier 20b. Il comprend une bague externe portée par le deuxième support palier 21b et une bague interne portée par l'arbre basse pression 8, en particulier le troisième tronçon 8c et notamment la paroi de support radiale 80c. La bague interne est revêtue de léchettes coopérant avec la bague externe.

L'enceinte intermédiaire 16 est délimitée axialement par un troisième joint 24c d'étanchéité de type dynamique par exemple à labyrinthe et un quatrième joint 24d d'étanchéité de type dynamique par exemple à labyrinthe. Le troisième joint 24c délimite l'extrémité amont de l'enceinte intermédiaire 16 et le quatrième joint 24d délimite l'extrémité aval de l'enceinte intermédiaire 16. Le troisième joint 24c est agencé en amont du troisième palier 20c. Il comprend une bague externe portée par le troisième support palier 21c et une bague interne portée par l'arbre basse pression 8 et notamment le premier tronçon 8a, en particulier par la première paroi axiale 81a. La bague interne peut être revêtue de léchettes coopérant avec la bague externe. Le quatrième joint 24d est agencé en aval du quatrième palier 20d. Plus précisément, le quatrième joint 24d est agencé axialement entre l'orifice radial 23 et le quatrième palier 20d. Il comprend une bague externe portée par un premier bras radial 21e s'étendant radialement vers l'intérieur à partir du carter intermédiaire 10 et une bague interne portée par l'arbre haute pression 9. La bague interne peut être revêtue de léchettes coopérant avec la bague externe.

L'ouverture 22a débouche dans l'enceinte de lubrification intermédiaire 16. Pour éviter les fuites d'huile de l'enceinte de lubrification intermédiaire 16 vers l'espace annulaire 22 au travers de l'ouverture 22a, un premier organe d'étanchéité 24g dynamique et un second organe d'étanchéité 24h dynamique sont agencés axialement de part et d'autre de l'ouverture 22a. Le premier organe d'étanchéité 24g est logé radialement entre le carter intermédiaire 10 et une extrémité amont de l'arbre haute pression 9 et le second organe d'étanchéité 24h dynamique est logé radialement entre le premier tronçon 8a et le carter intermédiaire 10. Le quatrième palier 20d est agencé axialement entre le quatrième joint 24d et le premier organe d'étanchéité 24g. Le premier organe d'étanchéité 24g est un joint à labyrinthe. Il comprend une bague externe d'étanchéité 21f reliée au carter intermédiaire 10 et une bague interne portée par l'extrémité amont de l'arbre haute pression 9. La bague externe 21f est agencée autour de l'ouverture 22a. La bague interne est revêtue de léchettes coopérant avec la bague externe 21f. Le second organe d'étanchéité 24h comprend une bague interne portée par le premier tronçon 8a et en particulier le manchon 82a. La bague interne est revêtue de léchettes coopérant avec la bague externe d'étanchéité 21f. La bague externe 21f est agencée autour de l'ouverture 22a.

La turbomachine 1 comprend en outre une enceinte d'air 25 délimitée axialement au moins en partie par la première portion tronconique 8b' et la paroi de séparation 80a. La paroi de séparation 80a sépare ainsi avantageusement l'enceinte de lubrification intermédiaire 16 et l'enceinte d'air 25. L'enceinte d'air 25 est par ailleurs délimitée extérieurement au moins en partie par la première paroi axiale 81a et la deuxième paroi axiale 81b. L'enceinte d'air 25 est agencée radialement entre les première et deuxième parois axiales 81a, 81b et le premier tronçon 8a.

L'enceinte d'air 25 comprend en outre une entrée d'air 25a. L'entrée d'air 25a est délimitée ou définie entre la première paroi axiale 81a et la deuxième paroi axiale 81b. L'enceinte d'air 25 est donc tournante.

L'enceinte d'air 25 est alimentée en air provenant du compresseur basse pression 3. Selon la présente invention, l'enceinte d'air 25 peut être alimentée directement ou indirectement par l'air provenant du compresseur basse pression 3. Par directement, il faut entendre que l'air du compresseur basse pression 3 est directement communiqué à l'enceinte d'air 25 tandis que par indirectement, il faut entendre que l'air du compresseur basse pression 3 est communiqué à un organe intermédiaire qui alimente à son tour l'enceinte d'air 25.

L'enceinte d'air 25 communique avec le passage interne 18 par l'orifice 19 ce qui permet le passage du premier flux d'air A1 de l'enceinte d'air 25 jusqu'au passage interne 18.

Avantageusement, la turbomachine 1 comprend en outre une cavité d'air 26 agencée autour de l'enceinte d'air 25. La cavité d'air 26 est fixe en rotation autour de l'axe longitudinal X. La cavité d'air 26 est agencée à l'intérieur du troisième support palier 21c. Elle est délimitée axialement par un cinquième joint 24e d'étanchéité dynamique par exemple à labyrinthe et un sixième joint 24f d'étanchéité dynamique par exemple à labyrinthe. Le cinquième joint 24e comprend une bague externe portée par le troisième support palier 21c et une bague interne portée par la deuxième paroi axiale 81b. La bague interne est revêtue de léchettes coopérant avec la bague externe. Le sixième joint 24f comprend une bague externe portée par le troisième support palier 21c et une bague interne portée par la première paroi axiale 81a. La cavité d'air 26 débouche dans l'enceinte d'air 25 via l'entrée d'air 25a. Le troisième support palier 21c peut avantageusement porter un tube (non représenté) débouchant dans la cavité d'air 26. Le tube permet l'acheminement d'air depuis le compresseur basse pression 3 jusqu'à l'intérieur de la cavité d'air 26.

La cavité d'air 26 est donc alimentée en air prélevé dans le compresseur basse pression 3, et l'enceinte d'air 25 est alimentée en air du compresseur basse pression 3 via la cavité d'air 26. La cavité d'air 26 permet d'homogénéiser la pression de l'air autour du troisième joint 24c et d'améliorer ainsi l'étanchéité de l'enceinte de lubrification intermédiaire 16. De légères fuites d'huile de l'enceinte de lubrification intermédiaire peuvent survenir. A cet effet, avantageusement, la turbomachine 1 comprend en outre une cavité de drainage 27 agencée axialement entre la cavité d'air 26 et l'enceinte de lubrification intermédiaire 16. La cavité de drainage 27 est délimitée axialement par le sixième joint 24f et le troisième joint 24c. Le troisième joint sépare ainsi axialement la cavité de drainage 27 de l'enceinte de lubrification intermédiaire 16. La cavité de drainage 27 est agencée à l'intérieur du troisième support palier 21c et délimitée intérieurement par l'arbre basse pression 8, et notamment le premier tronçon 8a, en particulier la première paroi axiale 81a.

La cavité de drainage 27 permet le stockage des fuites d'huile de l'enceinte de lubrification intermédiaire 16 et l'évacuation de cette huile à l'extérieur de l'enceinte de drainage 27. La cavité de drainage 27 évite ainsi les fuites d'huile dans l'enceinte d'air 25.

La turbomachine 1 peut comprendre des cavités de drainage additionnelles 27a aux bornes de l'enceinte de lubrification amont 15.

La turbomachine 1 comprend en outre un circuit de drainage comprenant un premier conduit de drainage (non représenté) qui permet la récupération de l'huile de la cavité de drainage 27 et l'évacuation de cette huile (non représentée) vers un réceptacle d'huile 28 ou vers l'extérieur de la turbomachine 1. Le réceptacle d'huile 28 est par exemple agencé dans un compartiment inter-veines agencé entre la veine primaire et la veine secondaire, ou en partie basse d'une nacelle de la turbomachine 1.

La turbomachine 1 comprend en outre un circuit de pressurisation C1. Le circuit de pressurisation C1 comprend un organe de prélèvement d'air (non représenté) configuré pour prélever de l'air du compresseur basse pression 3, et en particulier à l'aval du compresseur basse pression 3. Par « aval du compresseur » il est entendu que l'air est prélevé dans les derniers étages de compresseur basse pression 3, c'est-à-dire les étages situés à l'aval d'un étage médian situé à distance intermédiaire entre le premier et le dernier étage du compresseur basse pression 3.

Le circuit de pressurisation C1 comprend le premier flux d'air A1. Le premier flux d'air A1 permet la pressurisation de l'enceinte aval 17. Le premier flux d'air A1 est prélevé par l'organe de prélèvement. Le premier flux d'air A1 est dirigé vers l'enceinte d'air 25 via la cavité d'air 26 et circule dans le passage interne 18 via l'orifice 19. Le premier flux d'air A1 circule d'amont en aval dans le passage interne 18 jusqu'à l'enceinte de lubrification aval 17.

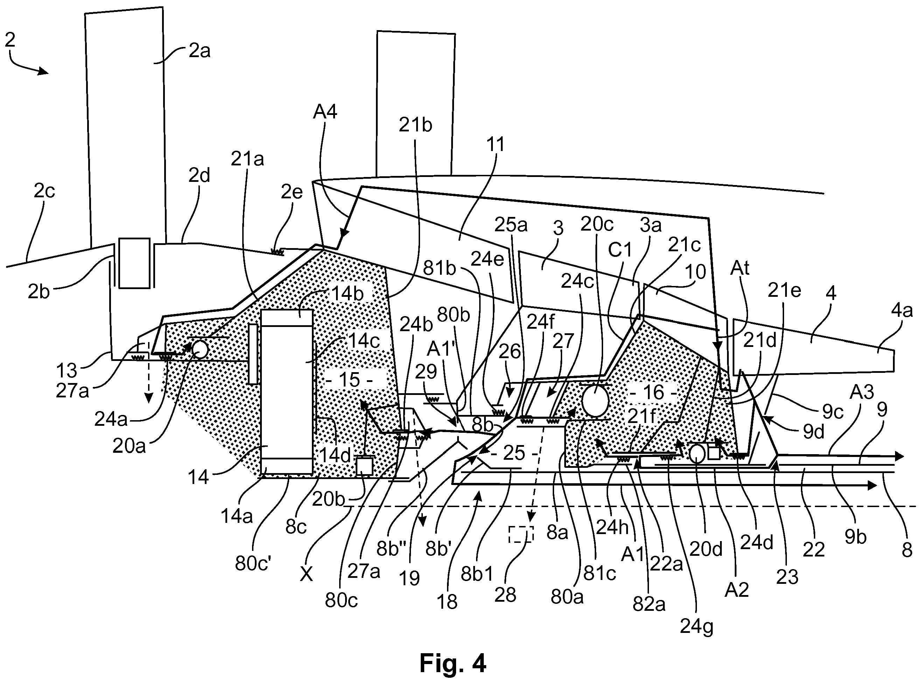

Selon un mode de réalisation représenté sur les figures 3 et 4, le circuit de pressurisation C1 comprend un flux d'air additionnel At prélevé par l'organe de prélèvement. Le circuit de pressurisation C1 comprend avantageusement un conduit présentant une entrée reliée à l'organe de prélèvement et une sortie débouchant à l'amont du compresseur haute pression 4. Le conduit passe avantageusement par un des bras du carter intermédiaire 10. Le flux d'air additionnel At est acheminé dans le conduit et est dirigé radialement vers le tronçon cylindrique 9b par le biais du perçage 9d. Il se divise ensuite en un second flux d'air A2 de pressurisation des premier et second organes d'étanchéité 24g, 24h et un troisième flux d'air A3 de refroidissement du rotor de compresseur 4a du compresseur haute pression 4.

Le second flux d'air A2 passe au travers de l'orifice radial 23 et est dirigé dans l'espace annulaire 22. Il circule d'aval en amont dans l'espace annulaire 22 jusqu'à l'enceinte d'étanchéité intermédiaire 16 par le biais de l'ouverture 22a.

Le troisième flux d'air A3 circule autour de l'arbre haute pression 9 de l'amont vers l'aval et permet le refroidissement du rotor de compresseur 4a du compresseur haute pression 4.

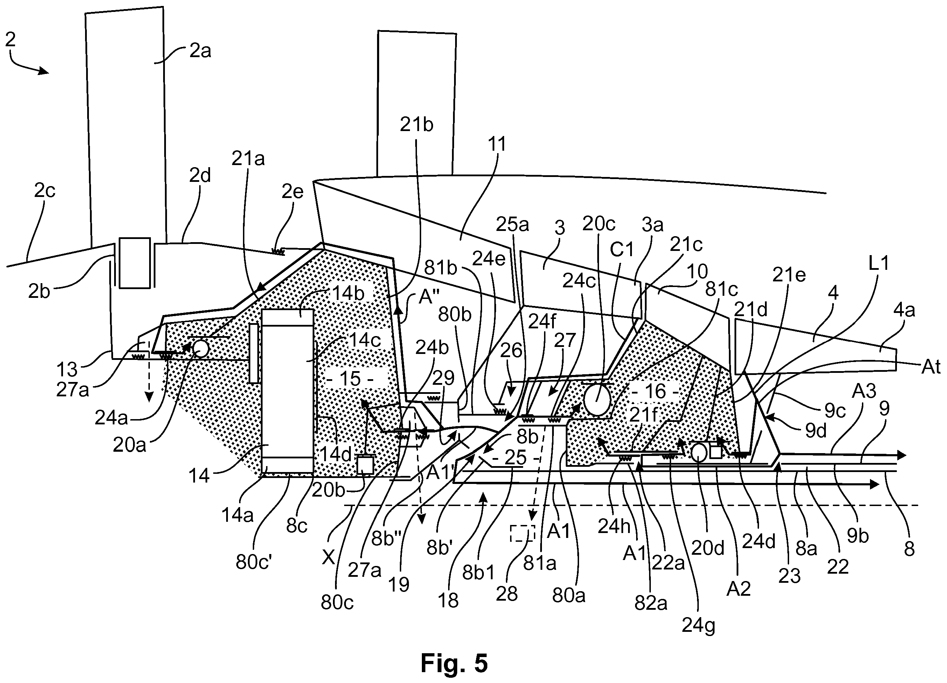

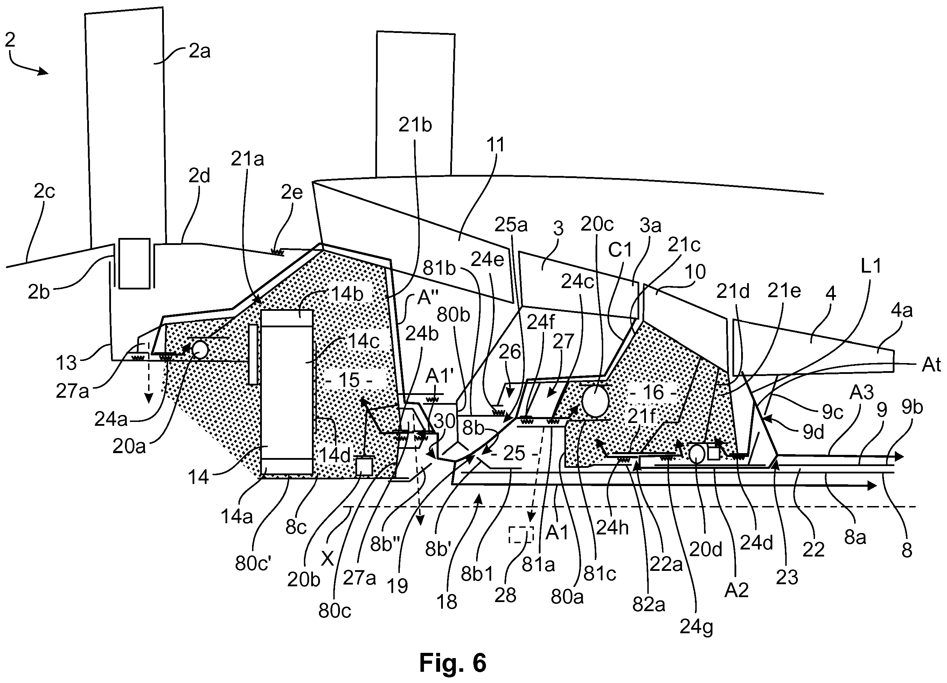

Alternativement pour le refroidissement du compresseur haute pression 4 et la pressurisation des premier et second organes d'étanchéité 24g, 24h, en référence aux figures 5 et 6, la turbomachine 1 comprend avantageusement un circuit de refroidissement L1. Le circuit de refroidissement L1 comprend un organe de prélèvement d'air (non représenté) configuré pour prélevé de l'air du compresseur haute pression 4, en particulier à l'amont du compresseur haute pression 4.

Le circuit de refroidissement L1 comprend le flux d'air additionnel At prélevé par l'organe de prélèvement d'air du compresseur haute pression 4. Le flux d'air additionnel At se divise en un second flux d'air A2 et un troisième flux d'air A3.

Le second flux d'air A2 est dirigé dans l'espace annulaire 22 au travers de l'orifice radial 23 et circule d'aval en amont dans l'espace annulaire 22 jusqu'à l'enceinte d'étanchéité intermédiaire 16 par le biais de l'ouverture 22a pour la pressurisation des premier et second organes d'étanchéité 24g, 24h. Le troisième flux d'air A3 circule autour de l'arbre haute pression 9 de l'amont vers l'aval et permet le refroidissement du rotor du compresseur haute pression 4a.

En outre, en référence à la figure 3, le circuit de pressurisation C1 comprend un quatrième flux d'air A4 de pressurisation de l'enceinte de lubrification amont 15. Le quatrième flux d'air A4 est prélevé par l'organe de prélèvement dans le compresseur basse pression 3. Le circuit de pressurisation C1 comprend avantageusement un conduit présentant une entrée reliée à l'organe de prélèvement et une sortie débouchant à l'intérieur du carter d'entrée 11. Le conduit passe avantageusement par un des bras du carter d'entrée 11. Le flux d'air A4 se divise en un flux amont A4' de pressurisation du premier joint 24a et un flux aval A4"de pressurisation du deuxième joint 24b.

Alternativement, en référence à la figure 4, un trou 29 axial est ménagé dans la paroi radiale 80b et est configuré pour conduire axialement une partie A1' du premier flux d'air A1 de l'enceinte d'air 25 vers l'enceinte de lubrification amont 15. La partie A1' du premier flux d'air A1 permet la pressurisation du deuxième joint 24b. Alternativement, le trou 29 est ménagé dans la seconde portion tronconique 8b".

Selon encore une alternative représentée sur la figure 5, la partie A1' du premier flux d'air A1 permet également la pressurisation du premier joint 24a. A cet effet, le circuit de pressurisation C1 comprend un conduit agencé dans la virole interne du carter d'entrée 11 et qui débouche à l'intérieur du carter d'entrée 11. Une portion A1" de la partie A1' du premier flux d'air A1 est dirigée dans le conduit et permet la pressurisation du premier joint 24a.

Ce mode de réalisation est particulièrement avantageux puisqu'aucun conduit ne traverse les bras du carter d'entrée. Les bras du carter d'entrée peuvent donc être dimensionnés pour perturber au minimum l'écoulement du flux primaire F1. Les performances aérodynamiques de la turbomachine 1 sont donc améliorées. En effet, lorsque le conduit est agencé dans au moins un bras, il peut être nécessaire d'adapter les dimensions du bras pour accueillir un tel conduit, ce qui pénalise alors les performances aérodynamiques de la turbomachine.

Selon encore une alternative représente sur la figure 6, la seconde portion tronconique 8b" présente un trou 30 qui est configuré pour conduire la partie A1' du premier flux d'air A1 de l'enceinte d'air 25 vers l'enceinte de lubrification amont 15. La partie A1' du premier flux d'air A1 permet la pressurisation du deuxième joint 24b.

Selon cette alternative, la partie A1' du premier flux d'air A1 permet également la pressurisation premier joint 24a. A cet effet, le circuit de pressurisation C1 comprend un conduit agencé dans la virole interne du carter d'entrée 11. Une portion A1" de la partie A1' du premier flux d'air A1 est dirigé dans le conduit et permet la pressurisation du premier joint 24a.

Ainsi, grâce au passage interne 18 de l'arbre basse pression, il est possible de faire circuler le premier flux d'air A1 prélevé dans le compresseur basse pression 3 jusqu'à l'enceinte de lubrification aval 17, permettant ainsi de maintenir une température adéquate de l'air de pressurisation de cette enceinte de lubrification aval pour éviter la cokéfaction de l'huile.

En outre, grâce à la présence d'un premier tronçon 8a cylindrique relié à la turbine basse pression 7 et d'un second tronçon 8b tronconique muni de l'orifice 19 et relié au compresseur basse pression 3, il est possible d'assurer l'entrée du premier flux d'air A1 dans le passage interne 18 sans percer le premier tronçon 8a. Ceci permet de répondre aux contraintes d'intégration mécanique de l'arbre basse pression 8 dans la turbomachine.

En outre, en s'affranchissant d'un perçage sur le premier tronçon, il n'est pas nécessaire de prévoir des joints dynamiques entre ce premier tronçon et l'arbre haute pression pour limiter les fuites au travers de ce perçage.

## Revendications

1. Turbomachine (1) pour un aéronef, la turbomachine (1) s'étendant le long d'un axe longitudinal (X) et comprenant :
- un compresseur basse pression (3) comprenant un rotor de compresseur (3a),
- un arbre basse pression (8) d'entrainement du rotor de compresseur (3a), l'arbre basse pression (8) étant centré sur l'axe longitudinal (X),
**caractérisée en ce que** l'arbre basse pression (8) présente un passage interne (18) destiné à la circulation d'un premier flux d'air (A1) le long de l'axe longitudinal (X) de l'amont vers l'aval, l'arbre basse pression (8) comprenant :
- un premier tronçon (8a) cylindrique,
- un deuxième tronçon (8b) solidaire en rotation du premier tronçon (8a) et agencé en amont du premier tronçon (8a), le deuxième tronçon (8b) comprenant une première portion tronconique (8b') reliée au rotor de compresseur (3a),
la turbomachine (1) comprenant en outre :
- un carter intermédiaire (10) agencé autour du premier tronçon (8a) et en aval du compresseur basse pression (3),
- au moins un palier (20c) de guidage en rotation de l'arbre basse pression (8) agencé radialement entre le premier tronçon (8a) et le carter intermédiaire (10),
- une enceinte de lubrification intermédiaire (16) annulaire dans laquelle est agencé ledit au moins un palier (20c), l'enceinte de lubrification intermédiaire (16) étant agencée dans le carter intermédiaire (10),
- une enceinte d'air (25) annulaire configurée pour être alimentée en air provenant du compresseur basse pression (3), l'enceinte d'air (25) étant délimitée axialement, au moins en partie, par la première portion tronconique (8b') et une paroi de séparation (80a) radiale montée autour du premier tronçon (8a), la première portion tronconique (8b') présentant en outre au moins un orifice (19) faisant communiquer l'enceinte d'air (25) avec le passage interne (18) pour permettre un passage du premier flux d'air (A1) de l'enceinte d'air (25) vers le passage interne (18).

2. Turbomachine selon la revendication précédente, **caractérisée en ce que** l'enceinte d'air (25) est délimitée extérieurement, au moins en partie, par une première paroi axiale (81a) s'étendant axialement vers l'amont à partir de la paroi de séparation (80a) et une deuxième paroi axiale (81b) reliée à la première portion tronconique (8b') et s'étendant axialement vers l'aval, les première et seconde parois (81a, 81b) délimitant axialement entre elles une entrée d'air (25a) pour permettre un passage du premier flux d'air (A1) du compresseur basse pression (3) à l'intérieur de l'enceinte d'air (25).

3. Turbomachine selon l'une quelconque des revendications précédentes, **caractérisée en ce qu'**elle comprend en outre une cavité d'air (26) annulaire fixe agencée autour de l'enceinte d'air (25), la cavité d'air (26) débouchant dans l'enceinte d'air (25) et étant alimentée par de l'air provenant du compresseur basse pression (3).

4. Turbomachine selon les revendications 2 et 3, **caractérisée en ce que** la cavité d'air (26) est délimitée axialement, au moins en partie, par un joint d'étanchéité dynamique (24f) logé radialement entre la première paroi axiale (81a) et le carter intermédiaire (10), et un joint d'étanchéité dynamique (24e) logé radialement entre la seconde paroi axiale (81b) et le carter intermédiaire (10).

5. Turbomachine selon l'une des revendications 3 ou 4, **caractérisée en ce qu'**elle comprend une cavité de drainage (27) agencée axialement entre l'enceinte de lubrification intermédiaire (16) et la cavité d'air (26).

6. Turbomachine selon les revendications 4 et 5, **caractérisée en ce que** la cavité de drainage (27) est délimitée axialement par le joint d'étanchéité dynamique (24f) logé radialement entre la première paroi axiale (81a) et le carter intermédiaire (10), et un joint d'étanchéité dynamique (24c) logé radialement entre la première paroi axiale (81a) et le carter intermédiaire (10) et séparant la cavité de drainage (27) de l'enceinte de lubrification intermédiaire (16).

7. Turbomachine selon l'une quelconque des revendications précédentes, **caractérisée en ce qu'**elle comprend en outre:
- un compresseur haute pression (4) agencé en aval du carter intermédiaire (10) et comprenant un rotor de compresseur (4a),
- un arbre haute pression (9) agencé coaxialement autour du premier tronçon (8a) de l'arbre basse pression (8) et relié au rotor de compresseur (4a), le premier tronçon (8a) et l'arbre haute pression (9) délimitant un espace annulaire (22) pour la circulation d'un second flux d'air (A2) de l'aval vers l'amont, et **en ce que** l'arbre haute pression (9) comprend un orifice radial (23) débouchant dans l'espace annulaire (22) pour le passage du second flux d'air (A2) de l'extérieur vers l'intérieur de l'espace annulaire (22).

8. Turbomachine selon la revendication précédente, **caractérisée en ce qu'**elle comprend un manchon (82a) agencé autour du premier tronçon (8a) et à l'intérieur du carter intermédiaire (10), le manchon (82a) étant solidaire de la paroi de séparation (80a) et délimitant axialement avec une extrémité amont de l'arbre haute pression (9) une ouverture (22a) pour le passage du second flux d'air (A2) de l'espace annulaire (22) vers l'enceinte de lubrification intermédiaire (16).

9. Turbomachine selon l'une quelconque des revendications précédentes, **caractérisée en ce qu'**elle comprend en outre :
- une soufflante (2) mobile en rotation autour de l'axe longitudinal (X) et agencée à l'amont du compresseur basse pression (3),
- un arbre de soufflante (13) relié à la soufflante (2),
- un réducteur de vitesse (14) reliant l'arbre de soufflante (13) à l'arbre basse pression (8), le réducteur de vitesse (14) étant agencé dans une enceinte de lubrification amont (15), et **en ce que** le deuxième tronçon (8b) comprend une paroi radiale (80b) s'étendant vers l'extérieur à partir de la première portion tronconique (8b') et reliant la première portion tronconique (8b') au rotor de compresseur (3a), la paroi radiale (80b) présentant un trou axial (29) pour le passage d'air (A1') de l'enceinte d'air (25) vers l'enceinte de lubrification amont (15).

10. Turbomachine selon l'une quelconque des revendications 1 à 8, **caractérisée en ce qu'**elle comprend en outre :
- une soufflante (2) mobile en rotation autour de l'axe longitudinal et agencée à l'amont du compresseur basse pression (3),
- un arbre de soufflante (13) reliée à la soufflante (2),
- un réducteur de vitesse (14) reliant l'arbre de soufflante (13) à l'arbre basse pression (8), le réducteur de vitesse (14) étant agencé dans une enceinte de lubrification amont (15), et **en ce que** le deuxième tronçon (8b) comprend une seconde portion tronconique (8b") reliée au réducteur de vitesse (14) et à la première portion tronconique (8b'), la seconde portion tronconique (8b") présentant un trou (30) débouchant dans le passage interne (18) pour le passage d'air (A1') de l'enceinte d'air (26) vers l'enceinte de lubrification amont (15).

## Patentansprüche

1. Turbotriebwerk (1) für ein Luftfahrzeug, wobei sich das Turbotriebwerk (1) entlang einer Längsachse (X) erstreckt und umfasst:
- einen Niederdruckverdichter (3), der einen Verdichterrotor (3a) umfasst,
- eine Niederdruckwelle (8) zum Antrieb des Verdichterrotors (3a), wobei die Niederdruckwelle (8) auf der Längsachse (X) zentriert ist,
**dadurch gekennzeichnet, dass** die Niederdruckwelle (8) einen inneren Durchgang (18) aufweist, der für die Strömung eines ersten Luftstroms (A1) entlang der Längsachse (X) von stromaufwärts nach stromabwärts vorgesehen ist, wobei die Niederdruckwelle (8) umfasst:
- einen ersten zylindrischen Abschnitt (8a),
- einen zweiten Abschnitt (8b), der mit dem ersten Abschnitt (8a) drehfest verbunden ist und stromaufwärts des ersten Abschnitts (8a) angeordnet ist, wobei der zweite Abschnitt (8b) einen ersten kegelstumpfförmigen Teil (8b') aufweist, der mit dem Verdichterrotor (3a) verbunden ist,
wobei das Turbotriebwerk (1) weiter umfasst:
- ein Zwischengehäuse (10), das um den ersten Abschnitt (8a) herum und stromabwärts des Niederdruckverdichters (3) angeordnet ist,
- mindestens ein Lager (20c) zur drehenden Führung der Niederdruckwelle (8), das radial zwischen dem ersten Abschnitt (8a) und dem Zwischengehäuse (10) angeordnet ist,
- eine ringförmige Zwischenschmierkammer (16), in der das mindestens eine Lager (20c) angeordnet ist, wobei die Zwischenschmierkammer (16) in dem Zwischengehäuse (10) angeordnet ist,
- eine ringförmige Luftkammer (25), die konfiguriert ist, um mit Luft aus dem Niederdruckverdichter (3) versorgt zu werden, wobei die Luftkammer (25) axial zumindest teilweise durch den ersten kegelstumpfförmigen Teil (8b') und eine radiale Trennwand (80a), die um den ersten Abschnitt (8a) herum angebracht ist, begrenzt ist, wobei der erste kegelstumpfförmige Teil (8b') ferner mindestens eine Bohrung (19) aufweist, die die Luftkammer (25) mit dem inneren Durchgang (18) verbindet, um einen Durchtritt des ersten Luftstroms (A1) von der Luftkammer (25) in den inneren Durchgang (18) zu ermöglichen.

2. Turbotriebwerk nach dem vorhergehenden Anspruch, **dadurch gekennzeichnet, dass** die Luftkammer (25) nach außen zumindest teilweise durch eine erste axiale Wand (81a), die sich axial stromaufwärts von der Trennwand (80a) erstreckt, und eine zweite axiale Wand (81b), die mit dem ersten kegelstumpfförmigen Teil (8b') verbunden ist und sich axial stromabwärts erstreckt, begrenzt ist, wobei die erste und die zweite Wand (81a, 81b) axial zwischen sich einen Lufteintritt (25a) begrenzen, um einen Durchtritt des ersten Luftstroms (A1) vom Niederdruckverdichter (3) in das Innere der Luftkammer (25) zu ermöglichen.

3. Turbotriebwerk nach einem der vorstehenden Ansprüche, **dadurch gekennzeichnet, dass** es außerdem einen feststehenden ringförmigen Luftraum (26) umfasst, der um die Luftkammer (25) herum angeordnet ist, wobei die Luftkammer (26) in die Luftkammer (25) mündet und mit Luft aus dem Niederdruckverdichter (3) gespeist wird.

4. Turbotriebwerk nach den Ansprüchen 2 und 3, **dadurch gekennzeichnet, dass** der Luftraum (26) axial zumindest teilweise durch eine dynamische Dichtung (24f), die radial zwischen der ersten axialen Wand (81a) und dem Zwischengehäuse (10) untergebracht ist, und eine dynamische Dichtung (24e), die radial zwischen der zweiten axialen Wand (81b) und dem Zwischengehäuse (10) untergebracht ist, begrenzt ist.

5. Turbotriebwerk nach einem der Ansprüche 3 oder 4, **dadurch gekennzeichnet, dass** es einen Entwässerungsraum (27) umfasst, der axial zwischen der Zwischenschmierkammer (16) und dem Luftraum (26) angeordnet ist.

6. Turbotriebwerk nach den Ansprüchen 4 und 5, **dadurch gekennzeichnet, dass** der Entwässerungsraum (27) axial durch die dynamische Dichtung (24f), die radial zwischen der ersten axialen Wand (81a) und dem Zwischengehäuse (10) untergebracht ist, und eine dynamische Dichtung (24c), die radial zwischen der ersten axialen Wand (81a) und dem Zwischengehäuse (10) untergebracht ist und den Entwässerungsraum (27) von der Zwischenschmierkammer (16) trennt, begrenzt ist.

7. Turbotriebwerk nach einem der vorstehenden Ansprüche, **dadurch gekennzeichnet, dass** es weiter umfasst:
- Hochdruckverdichter (4), der stromabwärts des Zwischengehäuses (10) angeordnet ist und einen Verdichterrotor (4a) umfasst,
- eine Hochdruckwelle (9), die koaxial um den ersten Abschnitt (8a) der Niederdruckwelle (8) angeordnet und mit dem Verdichterrotor (4a) verbunden ist, wobei der erste Abschnitt (8a) und die Hochdruckwelle (9) einen ringförmigen Zwischenraum (22) für die Strömung eines zweiten Luftstroms (A2) von stromabwärts nach stromaufwärts begrenzen, und dadurch, dass die Hochdruckwelle (9) eine radiale Bohrung (23) aufweist, die in den ringförmigen Zwischenraum (22) mündet, für den Durchtritt des zweiten Luftstroms (A2) von außen nach innen in den ringförmigen Zwischenraum (22).

8. Turbotriebwerk nach dem vorhergehenden Anspruch, **dadurch gekennzeichnet, dass** es eine Hülse (82a) umfasst, die um den ersten Abschnitt (8a) herum und innerhalb des Zwischengehäuses (10) angeordnet ist, wobei die Hülse (82a) mit der Trennwand (80a) fest verbunden ist und axial mit einem vorderen Ende der Hochdruckwelle (9) eine Öffnung (22a) für den Durchtritt des zweiten Luftstroms (A2) vom ringförmigen Zwischenraum (22) zur Zwischenschmierkammer (16) begrenzt.

9. Turbotriebwerk nach einem der vorstehenden Ansprüche, **dadurch gekennzeichnet, dass** es weiter umfasst:
- ein Gebläse (2), das drehend um die Längsachse (X) beweglich ist und stromaufwärts des Niederdruckverdichters (3) angeordnet ist,
- eine Gebläsewelle (13), die mit dem Gebläse (2) verbunden ist,
- ein Untersetzungsgetriebe (14), das die Gebläsewelle (13) mit der Niederdruckwelle (8) verbindet, wobei das Untersetzungsgetriebe (14) in einer vorderen Schmierkammer (15) angeordnet ist, und dadurch, dass der zweite Abschnitt (8b) eine radiale Wand (80b) umfasst, die sich von dem ersten kegelstumpfförmigen Teil (8b') nach außen erstreckt und den ersten kegelstumpfförmigen Teil (8b') mit dem Verdichterrotor (3a) verbindet, wobei die radiale Wand (80b) ein axiales Loch (29) für den Durchtritt von Luft (AT) von der Luftkammer (25) zur vorderen Schmierkammer (15) aufweist.

10. Turbotriebwerk nach einem der vorstehenden Ansprüche 1 bis 8, **dadurch gekennzeichnet, dass** es weiter umfasst:
- ein Gebläse (2), das drehend um die Längsachse beweglich ist und stromaufwärts des Niederdruckverdichters (3) angeordnet ist,
- eine Gebläsewelle (13), die mit dem Gebläse (2) verbunden ist,
- ein Untersetzungsgetriebe (14), das die Gebläsewelle (13) mit der Niederdruckwelle (8) verbindet, wobei das Untersetzungsgetriebe (14) in einer vorderen Schmierkammer (15) angeordnet ist, und dadurch, dass der zweite Abschnitt (8b) einen zweiten kegelstumpfförmigen Teil (8b") umfasst, der mit dem Untersetzungsgetriebe (14) und dem ersten kegelstumpfförmigen Teil (8b') verbunden ist, wobei der zweite kegelstumpfförmige Teil (8b") eine Bohrung (30) aufweist, die in den inneren Durchgang (18) mündet, für den Durchtritt von Luft (AT) von der Luftkammer (26) zur vorderen Schmierkammer (15).

## Claims

1. A turbomachine (1) for an aircraft, the turbomachine (1) extending along a longitudinal axis (X) and comprising:
- a low-pressure compressor (3) comprising a compressor rotor (3a),
- a low-pressure shaft (8) for driving the compressor rotor (3a), the low-pressure shaft (8) being centered on the longitudinal axis (X), **characterized in that** the low-pressure shaft (8) has an internal passage (18) configured for the circulation of a first air stream (A1) along the longitudinal axis (X) from upstream to downstream, the low-pressure shaft (8) comprising:
- a first cylindrical segment (8a),
- a second segment (8b) secured in rotation to the first segment (8a) and arranged upstream of the first segment (8a), the second segment (8b) comprising a first frustoconical portion (8b') connected to the compressor rotor (3a),
the turbomachine (1) comprising:
- an intermediate casing (10) arranged around the first segment (8a) and downstream of the low-pressure compressor (3),
- at least one bearing (20c) for guiding the low-pressure shaft (8) in rotation, arranged radially between the first segment (8a) and the intermediate casing (10),
- an annular intermediate lubrication chamber (16) wherein said at least one bearing (20c) is arranged, the intermediate lubrication chamber (16) being arranged in the intermediate casing (10),
- an annular air chamber (25) configured to be supplied with air from the low-pressure compressor (3), the air chamber (25) being delimited axially, at least in part, by the first frustoconical portion (8b') and a radial separating wall (80a) mounted around the first segment (8a), the first frustoconical portion (8b') also having at least one opening (19) putting the air chamber (25) into communication with the internal passage (18) to allow the first air stream (A1) to pass from the air chamber (25) to the internal passage (18).

2. The turbomachine according to the preceding claim, **characterized in that** the air chamber (25) is delimited externally, at least in part, by a first axial wall (81a) extending axially upstream from the separating wall (80a) and a second axial wall (81b) connected to the first frustoconical portion (8b') and extending axially downstream, the first and second walls (81a, 81b) axially delimiting between them an air inlet (25a) to allow the first air stream (A1) to pass from the low-pressure compressor (3) inside the air chamber (25).

3. The turbomachine according to any one of the preceding claims, **characterized in that** it further comprises a stationary annular air cavity (26) arranged around the air chamber (25), the air cavity (26) opening into the air chamber (25) and being supplied with air from the low-pressure compressor (3).

4. The turbomachine according to claims 2 and 3, **characterized in that** the air cavity (26) is delimited axially, at least in part, by a dynamic seal (24f) housed radially between the first axial wall (81a) and the intermediate casing (10), and a dynamic seal (24e) housed radially between the second axial wall (81b) and the intermediate casing (10).

5. The turbomachine according to one of claims 3 or 4, **characterized in that** it comprises a drainage cavity (27) arranged axially between the intermediate lubrication chamber (16) and the air cavity (26).

6. The turbomachine according to claims 4 and 5, **characterized in that** the drainage cavity (27) is delimited axially by the dynamic seal (24f) housed radially between the first axial wall (81a) and the intermediate casing (10), and a dynamic seal (24c) housed radially between the first axial wall (81a) and the intermediate casing (10) and separating the drainage cavity (27) from the intermediate lubrication chamber (16).

7. The turbomachine according to any one of the preceding claims, **characterized in that** it further comprises:
- a high-pressure compressor (4) arranged downstream of the intermediate casing (10) and comprising a compressor rotor (4a),
- a high-pressure shaft (9) arranged coaxially around the first segment (8a) of the low-pressure shaft (8) and connected to the compressor rotor (4a), the first segment (8a) and the high-pressure shaft (9) delimiting an annular space (22) for the circulation of a second air stream (A2) from downstream to upstream, and **in that** the high-pressure shaft (9) comprises a radial opening (23) opening into the annular space (22) for the passage of the second air stream (A2) from the outside to the inside of the annular space (22).

8. The turbomachine according to the preceding claim, **characterized in that** it comprises a sleeve (82a) arranged around the first segment (8a) and inside the intermediate casing (10), the sleeve (82a) being secured to the separating wall (80a) and axially delimiting, with an upstream end of the high-pressure shaft (9), an aperture (22a) for the passage of the second air stream (A2) from the annular space (22) to the intermediate lubrication chamber (16).

9. The turbomachine according to any one of the preceding claims, **characterized in that** it further comprises:
- a fan (2) movable in rotation about the longitudinal axis (X) and arranged upstream of the low-pressure compressor (3),
- a fan shaft (13) connected to the fan (2),
- a speed reducer (14) connecting the fan shaft (13) to the low-pressure shaft (8), the speed reducer (14) being arranged in an upstream lubrication chamber (15), and **in that** the second segment (8b) comprises a radial wall (80b) extending outwards from the first frustoconical portion (8b') and connecting the first frustoconical portion (8b') to the compressor rotor (3a), the radial wall (80b) having an axial hole (29) for the passage of air (A1') from the air chamber (25) to the upstream lubrication chamber (15).

10. The turbomachine according to any one of claims 1 to 8, **characterized in that** it further comprises:
- a fan (2) movable in rotation about the longitudinal axis and is arranged upstream of the low-pressure compressor (3),
- a fan shaft (13) connected to the fan (2),
- a speed reducer (14) connecting the fan shaft (13) to the low-pressure shaft (8), the speed reducer (14) being arranged in an upstream lubrication chamber (15), and **in that** the second segment (8b) comprises a second frustoconical portion (8b") connected to the speed reducer (14) and to the first frustoconical portion (8b'), the second frustoconical portion (8b") having a hole (30) opening into the internal passage (18) for the passage of air (A1') from the air chamber (26) to the upstream lubrication chamber (15).
